# EUROPÄISCHE PATENTANMELDUNG

(11) **EP 1 557 322 A1**
(43) Veröffentlichungstag der Anmeldung: **27.07.2005**
(21) Anmeldenummer: 05000028.0
(22) Anmeldetag: 03.01.2005
(51) Int. Cl.: B60R 21/01

(54) **Gasgenerator, Gasssackmodul und Verfahren zu ihrer Detektion**

(30) Priorität: 20.01.2004 DE 102004002881
(71) Anmelder: TRW Airbag Systems GmbH, 84544 Aschau am Inn (DE)
(72) Erfinder: Kapfelsperger, Thomas, 84453 Mühldorf (DE); Seidl, Johan, 84513 Töging (DE)
(74) Vertreter: Kitzhofer, Thomas, Dipl.-Ing.

(57) **Zusammenfassung**

Ein Gasgenerator oder ein Gassackmodul für ein Fahrzeugsicherheitssystem weist einen Signalgeber (22,24) auf, welcher durch ein von außen aufgebrachtes elektromagnetisches Erregerfeld oder einen von außen aufgebrachten Magnetfeldimpuls zur Abgabe eines Signals anregbar ist, welches mittels eines manuell verschieblichen Detektors (30) detektiert wird.

## Beschreibung

Die Erfindung betrifft einen Gasgenerator für ein Fahrzeugsicherheitssystem, insbesondere ein Insassenrückhaltesystem und ein Gassackmodul.

Im Fahrzeug verdeckt untergebrachte Gasgeneratoren aktivieren Gurtstraffer, Knie-Rückhaltesysteme, Gassäcke und dergleichen. Bei einem Unfall werden nicht zwingend alle Gasgeneratoren oder alle Stufen eines mehrstufigen Gasgenerators gezündet. Rettungsmannschaften, die einen Verunglückten aus dem Fahrzeug bergen, könnten möglicherweise aufgrund des mit der Bergung verursachten Zeitdrucks vergessen, daß auch noch nicht aktivierte Gasgeneratoren im Fahrzeug untergebracht sind. Mit Seitenschneidern, Trennschleifern oder Schneidbrennern sollten bestimmte Stellen am Fahrzeug, in denen die Gasgeneratoren verdeckt untergebracht sind, nicht gewaltsam geöffnet werden. Hinzu kommt, daß die Lage der Gasgeneratoren von Fahrzeug zu Fahrzeug unterschiedlich sein kann (Modellvielfalt, Ausstattungsunterschiede), was die Lokalisierung der nicht zum Fahrzeugöffnen geeigneten Stellen für weniger erfahrene Rettungskräfte erschwert. Aus diesem Grund wurde angedacht, die nicht gezündeten Gasgeneratoren oder Gasgeneratorenstufen nach einer vorbestimmten Zeit, unter Umständen sogar nach vorheriger Bestimmung der Lage des Insassen, durch Zündung zu entschärfen.

Die Erfindung schafft eine weitere Möglichkeit, durch unsachgemäße Einwirkung von außen bei Bergungen ein ungewolltes Auslösen des Gasgenerators zu verhindern.

Dies wird durch einen Gasgenerator oder ein Gassackmodul erreicht, der bzw. das einen Signalgeber aufweist, welcher durch ein von außen aufgebrachtes elektromagnetisches Erregerfeld oder einen von außen aufgebrachten Magnetfeldimpuls zur Abgabe eines Signals anregbar ist. Gasgeneratoren sind stets verdeckt eingebaut. Mittels eines mobilen Gerätes, das ein elektromagnetisches Erregerfeld oder einen Magnetfeldimpuls erzeugt, kann der am oder im Gasgenerator oder im Modul vorgesehene Signalgeber lokalisiert werden, denn er wird zur Abgabe eines Signals, genauer gesagt einer Schwingung angeregt. Der erfindungsgemäße Gasgenerator bzw. das erfindungsgemäße Modul bietet auch Vorteile für das Recyceln des Fahrzeugs, denn der Gasgenerator läßt sich sehr genau lokalisieren.

Vorzugsweise ist das Signal ein elektromagnetisches Signal, das der Signalgeber abgeben kann.

Der Signalgeber ist insbesondere ein Transmitter.

Eine Ausführungsform sieht vor, daß der Signalgeber ein amorphes Metallteil aufweist, üblicherweise als Metallstreifen ausgeführt. Solche Metalle werden insbesondere zur Abschirmung und als Magnetkerne verwendet.

Eine andere Ausführungsform sieht vor, den Signalgeber als harmonisches oder akustomagnetisches System auszuführen. Ein harmonisches System bedeutet, daß der Signalgeber auf die elektromagnetischen Felder des Erregers mit harmonischen Oberwellen antwortet. Entsprechende Signalgeber können beispielsweise durch ein 3 bis 10 cm langes, 1 bis 2 mm breites und 0,02 mm dünnes amorphes Metallband gebildet sein. Auf diesem Metallband sitzen kürzere Streifen mit dauermagnetischen Eigenschaften.

Akustomagnetische Systeme sind besonders preisgünstig, sie bestehen z.B. aus einer kleinen Kunststoffbox, die z.B. etwa 40 mm lang ist, je nach Ausführung 4 bis 14 mm breit und etwa 1 mm hoch ist. Sie beherbergen einen ca. 6 mm breiten amorphen Metallstreifen, der frei beweglich gelagert ist und als Resonator dient. Am Boden der Kunststoffbox ist ein dünner hartmagnetischer Streifen angeordnet, der im aktivierten Zustand magnetisiert ist, der aber zum Deaktivieren entmagnetisiert werden kann. Der amorphe Streifen kann durch äußere Feldeinwirkung zum Schwingen angeregt werden, und zwar durch einen Magnetfeldimpuls im Ultraschallbereich. Dieser Impuls wird abwechselnd eingeschaltet und wieder ausgeschaltet. Der amorphe Streifen beginnt zu schwingen und schwingt auch in den Schaltpausen nach. Bei akustomagnetischen Systemen ließe sich auch eine Schaltbarkeit des Signalgebers sehr einfach verwirklichen, d.h. er könnte deaktiviert werden, wenn der Gasgenerator gezündet worden ist.

Der Signalgeber ist vorzugsweise ein separates, z.B. auf dem Außengehäuse oder in demselben angeordnetes bzw. untergebrachtes Teil. Eine andere Ausführungsform sieht hingegen vor, daß ein Wandabschnitt des Gasgenerators als Signalgeber ausgebildet oder, allgemeiner, ein ohnehin im Gasgenerator für andere Zwecke vorgesehenes Teil als Signalgeber ausgeführt ist.

In diesem Zusammenhang kann z.B. ein Wandabschnitt magnetisiert werden.

Andere Möglichkeiten der Ausführung des Signalgebers sind Radiofrequenz-, Hochfrequenz- oder Niederfrequenzsysteme.

Gemäß einer Ausführungsform kann vorgesehen sein, daß der Gasgenerator so ausgebildet ist, daß er bei seiner Aktivierung den Signalgeber deakiviert. Dies kann beispielsweise dadurch erfolgen, daß der Signalgeber aufgrund der Erhitzung des Gasgenerators bei der Aktivierung zerstört wird. Bei mehrstufigen Gasgeneratoren kann es diesbezüglich von Vorteil sein, wenn jeder einzelnen Stufe ein Signalgeber zugeordnet ist, so daß auch ein Gasgenerator detektiert wird, der teilweise aktiviert wurde.

Die Erfindung beschreibt auch ein Verfahren zum Detektieren eines Gassackmoduls oder eines Gasgenerators in einem Fahrzeug. Dieses Verfahren sieht vor, daß ein manuell verschieblicher Detektor über ein Fahrzeugteil bewegt wird, der ein (elektro)magnetisches Erregerfeld oder einen Magnetfeldimpuls aussendet und der dadurch erzeugte Signale eines generator- oder modulseitigen Signalgebers detektiert.

Weitere Merkmale und Vorteile der Erfindung ergeben sich aus der nachfolgenden Beschreibung und aus den nachfolgenden Zeichnungen, auf die Bezug genommen wird. In den Zeichnungen zeigen:
- Figur 1 eine Längsschnittansicht durch ein erfindungsgemäßes Gassackmodul mit einem erfindungsgemäßen Gasgenerator, und
- Figuren 2 und 3 Ansichten von beim erfindungsgemäßen Gasgenerator vorgesehenen Signalgebern.

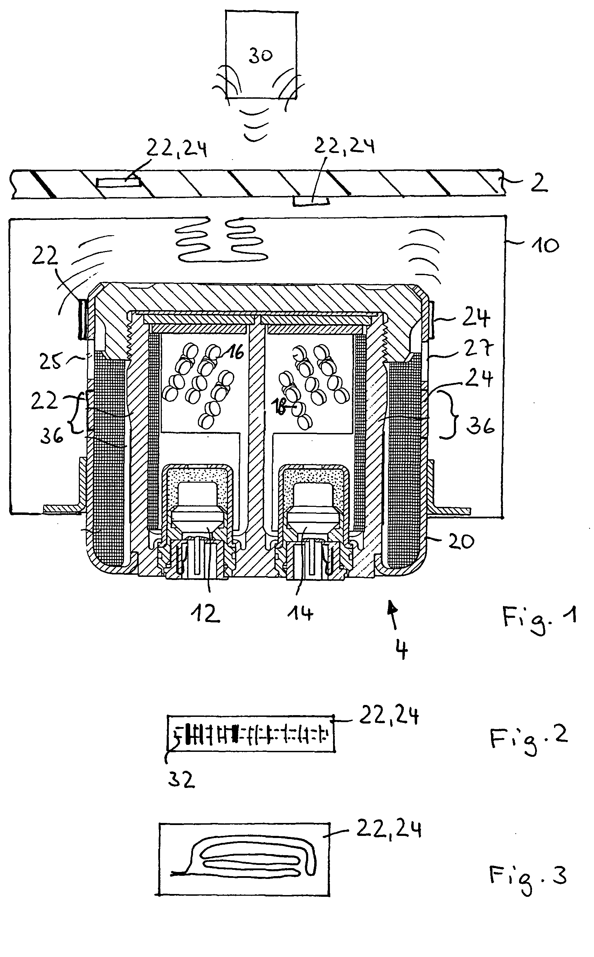

In Figur 1 ist ein Gassackmodul mit einer Modulabdeckung 2, einem Gasgenerator 4 und einem Gassack 10 dargestellt.

Der Gasgenerator 4 ist als Zwei-Stufen-Gasgenerator ausgeführt und hat zwei getrennt voneinander aktivierbare Zünder 12, 14, denen jeweils ein pyrotechnischer Treibsatz 16 bzw. 18 zugeordnet ist. Beim Aktivieren des entsprechenden Zünders 12, 14 wird der Treibsatz 16 bzw. 18 gezündet, und das entstehende heiße Gas strömt aus dem Außengehäuse 20 des Gasgenerators heraus und bläst den Gassack 10 auf.

Am Außengehäuse 20 ist im Bereich von Ausströmöffnungen 25, 27 je ein von außen aufgesetzter Signalgeber 22, 24 angebracht. Diese Signalgeber 22, 24 können ein amorphes Metallteil aufweisen, als harmonisches oder akustomagnetisches System ausgeführt sein oder auf äußere Radiofrequenz-, Hochfrequenzoder Niederfrequenzstrahlung zur Abgabe eines elektromagnetischen Signals angeregt werden. Als Anregungsquelle dient ein manueller Detektor 30, der von Rettungskräften, z.B. entlang eines Dachrahmens geführt wird und der die Signalgeber 22, 24 aufgrund von (elektro)magnetischen Erregerfeldern oder Magnetfeldimpulsen anregt und der die von den Signal gebern 22, 24 abgegebenen Signale auch detektiert.

Die Signalgeber 22, 24 können beispielsweise wie in Figur 2 ausgeführt werden, nämlich als Barcode-Klebestreifen, hinter dem ein amorpher Metallstreifen 32 liegt.

Durch die Erwärmung nach Zündung der entsprechenden Stufen wird der Signalgeber 22, 24 deaktiviert. Alternativ kann natürlich auch eine Radiofrequenzsignale erregbare Schleife aus weichmagnetischem Material (z.B. aus Eisen-Nickel-Legierungen) verwendet werden, das an einer Stelle aufgrund der entstehenden Hitze schmilzt, so daß der Kreis unterbrochen wird. Dies ist in Figur 3 als Alternative dargestellt.

Der Signalgeber 22, 24 muß nicht zwingend am Gasgenerator 4 sitzen, er kann auch an anderen Teilen des Moduls, beispielsweise auf der Unterseite oder in der Abdeckkappe 2 oder an einem Blecheinleger positioniert sein oder einen Abschnitt desselben bilden.

Alternativ zur Ausführung eines Signalgebers 22, 24 als vorgefertigtes Einzelteil, das an irgendeiner Stelle des Gasgenerators 4 / des Moduls angebracht ist, kann auch ein bereits bestehender Wandabschnitt des Gasgenerators, z.B. der Wandabschnitt 36 magnetisiert sein und damit als integrierter Signalgeber 22, 24 dienen.

Zu betonen ist, daß alle Einzelmerkmale des Signalgebers, auch die in der Beschreibungseinleitung beschriebenen, sowohl für den Einsatz im Gasgenerator als auch im Modul verwendbar und vorteilhaft sind.

## Patentansprüche

1. Gasgenerator für ein Fahrzeugsicherheitssystem, insbesondere ein Insassenrückhaltesystem,
mit einem durch einen von außen aufgebrachtes elektromagnetisches Erregerfeld oder durch einen von außen aufgebrachten Magnetfeldimpuls zu der Abgabe eines Signals anregbaren Signalgeber (22, 24).

2. Gasgenerator nach Anspruch 1, **dadurch gekennzeichnet, daß** der Signalgeber so ausgebildet ist, daß er ein elektromagnetisches Signal abgibt.

3. Gasgenerator nach Anspruch 1 oder 2, **dadurch gekennzeichnet, daß** der Signalgeber (22, 24) ein amorphes Metallteil (32) aufweist.

4. Gasgenerator nach einem der vorhergehenden Ansprüche, **dadurch gekennzeichnet, daß** der Signalgeber (22, 24) ein harmonisches oder akustomagnetisches System ist.

5. Gasgenerator nach einem der vorhergehenden Ansprüche, **dadurch gekennzeichnet, daß** der Signalgeber (22, 24) auf eine äußere Radiofrequenzanregung hin in Schwingung versetzt werden kann, um das Signal abzugeben.

6. Gasgenerator nach einem der vorhergehenden Ansprüche, **dadurch gekennzeichnet, daß** der Signalgeber (22, 24) ein separates Teil ist.

7. Gasgenerator nach einem der vorhergehenden Ansprüche, **dadurch gekennzeichnet, daß** der Signalgeber (22, 24) am Außengehäuse (20) des Gasgenerators (4) angebracht ist.

8. Gasgenerator nach einem der vorhergehenden Ansprüche, **dadurch gekennzeichnet, daß** ein Wandabschnitt (36) des Gasgenerators (4) als Signalgeber (22, 24) ausgebildet ist.

9. Gasgenerator nach Anspruch 8, **dadurch gekennzeichnet, daß** der Wandabschnitt (36) magnetisiert ist.

10. Gasgenerator nach einem der vorhergehenden Ansprüche, **dadurch gekennzeichnet, daß** der Signalgeber (22, 24) so ausgebildet ist, daß er bei Aktivierung des Gasgenerators (4) deaktiviert wird.

11. Gassackmodul für ein Fahrzeugsicherheitssystem,
mit einem durch ein von außen aufgebrachtes elektromagnetisches Erregerfeld oder durch einen von außen aufgebrachten Magnetfeldimpuls zu der Abgabe eines Signals anregbaren Signalgeber (22, 24).

12. Gassackmodul nach Anspruch 11, mit einer Abdeckung (2), die mit dem Signalgeber (22, 24) versehen ist.

13. Gassackmodul nach Anspruch 11 oder 12, **dadurch gekennzeichnet, daß** der Signalgeber (22, 24) die Eigenschaften hat, die in wenigstens einem der Ansprüche 2 bis 10 für den Signalgeber (22, 24) definiert sind.

14. Verfahren zum Detektieren eines Gassackmoduls oder eines Gasgenerators (4) in einem Fahrzeug, **dadurch gekennzeichnet, daß** ein manuell verschieblicher Detektor (30) über ein Fahrzeugteil bewegt wird, der ein magnetisches, insbesondere elektromagnetisches Erregerfeld oder einen Magnetfeldimpuls aussendet und der dadurch erzeugte Signale eines modul- oder generatorseitigen Signalgebers (22, 24) detektiert.
